# EUROPEAN PATENT APPLICATION

(11) **EP 1 958 814 A1**
(43) Date of publication of application: **20.08.2008**
(21) Application number: 08001821.1
(22) Date of filing: 31.01.2008
(51) Int. Cl.: B60K 35/00, B60K 37/06

(54) **Vehicle user interface systems**

(30) Priority: 13.02.2007 GB 0702712
(71) Applicant: Agco SA, 60026 Beauvais (FR)
(72) Inventor: Shute, Malcolm, St. Germain la Poterie, 60650 (FR); Szymczak, Dominique, Beauvais, 60000 (FR)
(74) Representative: Morrall, Roger

(57) **Abstract**

A vehicle information display system (10) for a utility vehicle is provided and comprises an electronic display (11) mounted on a steering wheel (12) of the vehicle for rotation with the steering wheel. A control means (23) serves to electronically rotate information displayed on the electronic display in response to a sensed steering wheel angle so that, within specified limits, the information remains generally horizontal and therefore readable to the vehicle operator. The electronic display (11) advantageously includes touch sensitive areas (41) which can be used to input information or control instructions for operating systems of the vehicle. This reduces the number of mechanical user inputs required in the cab, thereby increasing the available space for the operator and improving visibility.

## Description

This invention relates to vehicle user interface systems and in particular, though not exclusively, to such devices for use in agricultural tractors or similar vehicles.

As agricultural technology progresses, so too does the functionality of agricultural vehicles such as tractors and harvesters. This continuing development tends to increase the number of user interface devices such as meters, dials, levers and buttons for example. Whilst this delivers a better tool for agricultural use, the increase in user inputs presents a problem in maintaining the available space in the vehicle cab for the operator.

US-5,691,695 discloses a vehicle steering wheel which is provided with a reconfigurable display. Vehicle instrument information is provided on the display and is reconfigured so as to be displayed horizontal in response to a sensed orientation of the steering wheel. This is particularly advantageous for a car in particular wherein the dashboard is often obscured by the centre portion of the steering wheel.

It is an object of the present invention to provide an improved form of vehicle user interface system which is readily visible at all times by the vehicle operator and is particularly suited to a utility vehicle.

Thus according to the present invention there is provided a vehicle user interface system for a utility vehicle comprising an electronic display mounted on a steering wheel of the vehicle for rotation with the steering wheel, a steering wheel angle sensor, and a control means for electronically rotating information displayed on the electronic display so that, within specified limits, the information remains generally horizontal and therefore readable to the vehicle operator characterised in that the electronic display includes touch sensitive areas which can be used to input information or control instructions for operating systems of the vehicle..

Such a user interface system is particularly suitable for use in utility vehicles such as tractors where the normal dashboard instruments are often somewhat remote from the operator and are not easily viewed without the operator looking away from the road or working area for a significant period of time. By incorporating touch sensitive areas onto the electronic display various user inputs can be included on the steering wheel thus removing the need for the mechanical equivalent in the cab environment. Advantageously, this increases the available room in the cab and can potentially improve the vision and comfort of the operator.

A utility vehicle lends itself well to the incorporation of user inputs on the steering wheel because of the manner in which the vehicle is driven. For example, a tractor is typically driven at relatively slow speeds and for long distances in a substantially straight line. This allows the operator to make adjustments for example, using the touch input areas with relative ease and without the safety concerns which may otherwise occur on faster vehicles. Furthermore, adjustments to the operating parameters, for example the depth of the implement, are often made when the vehicle is stationary. Therefore the steering wheel provides a convenient carrier for a touch input device.

The display means is preferably an LCD unit. The pixels of the unit are also preferably square so that the display is not distorted as the information is rotated.

Typically a display with 1024 x 768 pixels will be used with a central area of 768 x 768 pixels used for the display of the information which is to be rotated. This information is in effect displayed on a generally central circular area of the LCD with a diameter of 768 pixels.

The parameter to be displayed will depend on the type of the vehicle but, when the vehicle is an agricultural tractor, for example, the parameter could include:-
Engine Speed
Engine temperature
Fuel level
Fuel consumption
Vehicle ground speed
PTO Speed
4 Wheel Drive Engagement
Gear Ratio Engaged
Warning lights for various vehicle sub-systems
Headlight warning light
Turn indicator flashers

The inputs which could be made by the operator, in addition to inputting an indication of an initial "display horizontal" signal, could be used to input data into any of the other vehicle control sub-systems and to switch on and off lights and turn indicators etc. For example the touch sensitive areas could be used to actuate or provide an indication of the status of a control routine (such as a headland management routine).

The display is not continuously rotated but the control means is preferably arranged to rotate the display to re-orientate the displayed information to a generally horizontal position to the current steering wheel position if that steering wheel position is maintained for a specified period of time, e.g. 1 second.

Preferably, the control means repositions said touch sensitive areas on the display in response to a signal generated by the steering wheel angle sensor.

The control means may rotate displayed information relating to said touch sensitive areas on the display in response to a signal generated by the steering wheel angle sensor so that the information remains at a generally steady orientation and therefore readable to the vehicle operator. In a preferred example a substantially linear scale is displayed on a touch sensitive area and comprises a range of operating parameters which can be selected by the vehicle operator through touch input thereto.

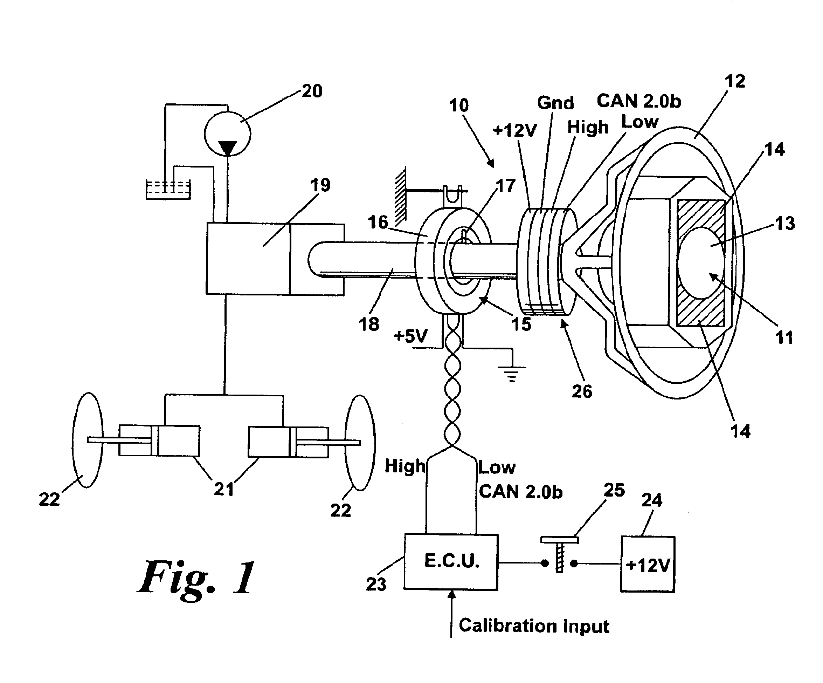

One embodiment of the present invention will now be described, by way of example only, with reference to the accompanying drawings in which:-
Figure 1 shows in diagrammatic form a vehicle user interface system in accordance with the present invention applied to an agricultural tractor; and,
Figure 2 shows in diagrammatic form a typical screen configuration for the electronic display of the system.

Referring to the drawings, a tractor user interface system 10 has an LCD display unit 11 mounted in the centre of a tractor steering wheel 12. The LCD unit is mounted so that it rotates with the steering wheel 12. In a typical arrangement, the LCD unit 11 has a display of 1024 x 768 pixels with a central display area 13 of 768 pixels in diameter on which the tractor information is to be displayed. The remainder of the display area 14 which is outside this central area 13 is blacked off. A suitable LCD display unit is available from BOE with a 10.4 inch screen size and is sold under model HT10X21/XGA.

The user interface system also includes a steering wheel angle sensor 15 which comprises an outer sensing coil 16 and datum member 17 which rotates with a steering column 18 which is attached to steering wheel 12. In a conventional manner, steering column 18 is connected with a hydraulic steering valve 19 which supplies pressurised fluid from a pump 20 to steering cylinders 21 associated with the front wheels 22 of the tractor.

Sensing coil 16 is connected with electronic control unit 23. Control unit 23 not only measures the steering angle by sensing the variation in the field of the coil 16 due to the movements datum member 17 but may also control many other functions of the tractor. Control unit 23 is connected with the tractor battery 24 via a reset switch 25.

LCD screen 11 is covered by a touch sensitive film (not shown). The film is connected to the electronic control unit 23 and provides a number of touch sensitive zones 41 in a central area 13 of the screen 11, via which data can be entered into various operating systems of the tractor. This data which is entered by the tractor operator together with information to be displayed on the LCD unit 11 is communicated to and from the LCD unit via a brush contact arrangement generally indicated at 26.

In accordance with the present invention, information which is to be displayed on the central zone 13 of the LCD unit 11 is arranged to be rotated, within specified limits, in order that information which is displayed on the LCD unit 11 remains generally horizontal to the driver of the tractor.

For example, the system can be set up so that if a given steering wheel angle is maintained for a predetermined time period, for example one second, the display is rotated so that the information is displayed horizontally relative to the steering wheel position which has been maintained during the last one second period.

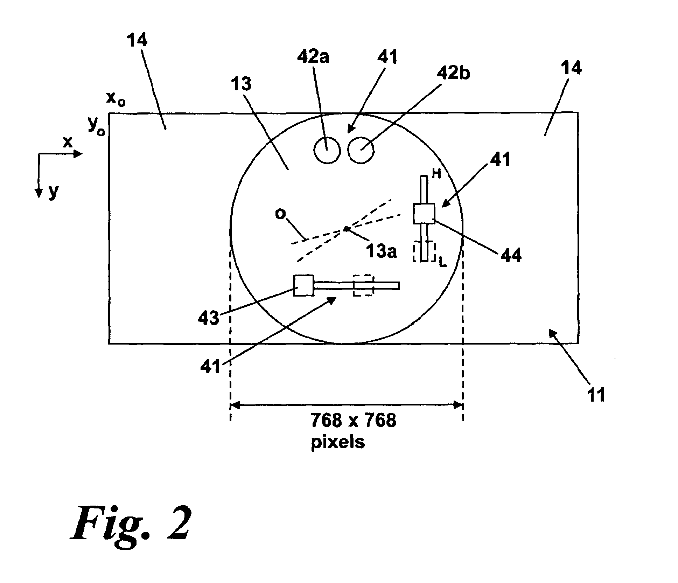

With particular reference to Figure 2, three touch sensitive areas 41 are shown. In a first zone, touch sensitive buttons 42a, 42b control the front and rear working lights. The control means 23 repositions the buttons 42a, 42b on the display in response to a signal generated by the steering wheel angle sensor 15. For example, if the steering wheel is turned through an angle, the buttons are repositioned on the central zone 13 to maintain their relative position at the top as viewed by the operator.

In second and third touch sensitive zones, buttons 43, 44 are displayed on linear scale oriented in a horizontal and vertical direction respectively. The buttons 43, 44 on these scales can be moved by touch input from the user to another position as shown by the dotted outline for example. The button 43 controls the output temperature of the cab air conditioning for example. The button 44 on the vertical scale may control the fan speed of the air conditioning. The control means 23 serves to rotate and reposition the scales in response to a signal generated by the steering wheel angle sensor 15 so that they remain at a generally steady orientation and therefore readable to the vehicle operator.

This type of control algorithm is found satisfactory since it is unnecessary to continuously rotate the data as the operator will not be trying to read the data when he is making significant movements of the steering wheel.

The information displayed on the LCD unit 11 is rotated using standard pixel transformation techniques and it will appreciated that in order for the information not to be distorted when it is rotated the screen will preferably be designed to have generally square pixels. The LCD unit 11 will typically include a graphics controller such as the SSD1906QTZ unit available from Solomon Systech to provide the high refresh rate required for the display, and a link to a CAN bus of the vehicle. An image of the screen to be displayed is saved in the control unit 23. This image is a full XY plot of the image in colour. This saved image is then conected/updaled by the graphics controller as new parameters are sent to the control unit 23 and the image is then rotated according to the angle signal received from sensor 15.

The data processing associated with the relocation of the touch input functionality of the display is carried out by the control unit 23 in communication with the touch sensitive film.

It should be appreciated that the entire display area has touch input functionality but only selected portions are active at any one time.

Typically when the tractor operator initially turns on the tractor ignition, the LCD unit will display a line 50 which will be rotated at about a central point 13a in the display area 13 at a rotation speed of say 1 degree per 300ms. When this line is displayed horizontally for the tractor driver he will press the reset switch 25 which then calibrates the display configuration and allows the control unit 23 to reset the initial zero degree or "display horizontal" position.

As will be appreciated, the user interface system of the present invention is particularly suitable for use in vehicles such as tractors where the normal dashboard instruments are often somewhat remote from the operator and are not easily viewed without the operator looking away from the road or working area for a significant period of time. Also the operator is able to make inputs of information or enter commands without moving his hands from the steering wheel.

In summary, there is provided a vehicle information display system for a utility vehicle comprising an electronic display mounted on a steering wheel of the vehicle for rotation with the steering wheel. A control means serves to electronically rotate information displayed on the electronic display in response to a sensed steering wheel angle so that, within specified limits, the information remains generally horizontal and therefore readable to the vehicle operator. The electronic display advantageously includes touch sensitive areas which can be used to input information or control instructions for operating systems of the vehicle. This reduces the number of mechanical user inputs required in the cab, thereby increasing the available space for the operator and improving visibility.

## Claims

1. A vehicle user interface system (10) for a utility vehicle comprising an electronic display (11) mounted on a steering wheel (12) of the vehicle for rotation with the steering wheel, a steering wheel angle sensor (15), and a control means (23) for electronically rotating information displayed on the electronic display so that, within specified limits, the information remains generally horizontal and therefore readable to the vehicle operator, **characterised in that** the electronic display (11) includes touch sensitive areas (41) which can be used to input information or control instructions for operating systems of the vehicle.

2. A system according to claim 1 in which the electronic display is an LCD with square pixels.

3. A system according to claim 2 in which the information is displayed on a central circular area (13) of the LCD.

4. A system according to any preceding claim for use on a tractor in which the information displayed comprises one or more of the following parameters:-
Engine Speed
Engine temperature
Fuel level
Fuel consumption
Vehicle ground speed
PTO Speed
4 Wheel Drive Engagement
Gear Ratio Engaged
Warning lights for various vehicle sub-systems
Headlight warning light
Turn indicator flashers

5. A system according to any preceding claim in which the touch sensitive areas (41) can be used to switch on and off lights and/or turn indicators.

6. A system according to any preceding claim in which the display is re-orientated to a generally horizontal position of a given steering wheel position is maintained for a specified period of time.

7. A system according to any preceding claim, wherein said control means (23) repositions said touch sensitive areas (41) on the display in response to a signal generated by the steering wheel angle sensor (15).

8. A system according to any preceding claim, wherein said control means (23) rotates displayed information relating to said touch sensitive areas on the display in response to a signal generated by the steering wheel angle sensor (15) so that the information remains at a generally steady orientation and therefore readable to the vehicle operator.

9. A system according to Claim 8, wherein a substantially linear scale (43,44) is displayed on a touch sensitive area (41) and comprises a range of operating parameters which can be selected by the vehicle operator through touch input thereto.
